# EUROPÄISCHE PATENTSCHRIFT

(11) **EP 3 571 425 B1**
(45) Veröffentlichungstag und Bekanntmachung des Hinweises auf die Patenterteilung: **02.03.2022**
(21) Anmeldenummer: 17826192.1
(22) Anmeldetag: 18.12.2017
(51) Int. Cl.: F16H 45/02, B60K 6/40, B60K 6/405, F16H 41/24, B60K 6/485

(54) **DREHMOMENTÜBERTRAGUNGSBAUGRUPPE**
TORQUE TRANSMISSION ASSEMBLY
ENSEMBLE DE TRANSMISSION DE COUPLE

(30) Priorität: 18.01.2017 DE 102017200765; 13.02.2017 DE 102017202196
(43) Veröffentlichungstag der Anmeldung: 27.11.2019
(73) Patentinhaber: ZF Friedrichshafen AG, 88046 Friedrichshafen (DE)
(72) Erfinder: WIRACHOWSKI, Michael, 97078 Würzburg (DE); NEUGEBAUER, Sebastian, 97421 Schweinfurt (DE); ORLAMÜNDER, Andreas, 97453 Schonungen (DE); SASSE, Christoph, 97422 Schweinfurt (DE); FAUSS, Christoph, 97440 Werneck (DE); HERZOG, Stefan, 96450 Coburg (DE)
(74) Vertreter: ZF Friedrichshafen AG
(86) Internationale Anmeldenummer: PCT/EP2017/083217
(87) Internationale Veröffentlichungsnummer: WO 2018/134011

(56) Entgegenhaltungen:
- EP-A2- 2 600 031
- EP-A2- 2 706 260
- EP-A2- 2 743 541
- DE-A1-102004 004 176
- DE-A1-102009 020 672
- DE-A1-102010 015 431
- JP-A- 2012 197 886

## Beschreibung

Die vorliegende Erfindung betrifft eine Drehmomentübertragungsbaugruppe für ein Antriebssystem eines Fahrzeugs, umfassend ein Gehäuse, eine mit dem Gehäuse zur gemeinsamen Drehung um eine Drehachse gekoppelte antriebsseitige Reibflächenanordnung, eine mit einem Abtriebsorgan zur gemeinsamen Drehung um die Drehachse gekoppelte und in Reibeingriff mit der antriebsseitigen Reibflächenanordnung bringbare abtriebsseitige Reibflächenanordnung und eine Auslenkungsmassenanordnung mit einem Auslenkungsmassenträger und wenigstens einer an dem Auslenkungsmassenträger getragenen und bezüglich des Auslenkungsmassenträgers aus einer Grund-Relativlage auslenkbaren Auslenkungsmasse.

Die EP 2 600 031 A2 zeigt ein Antriebssystem, bei welchem an der Kurbelwelle einer Brennkraftmaschine der Eingang einer Torsionsschwingungsdämpferanordnung drehfest angreift. Der Ausgang dieser Torsionsschwingungsdämpferanordnung ist über einen Auslenkungsmassenträger einer Auslenkungsmassenanordnung mit dem Gehäuse einer Drehmomentübertragungsbaugruppe verbunden, wobei Torsionsschwingungsdämpferanordnung, Auslenkungsmassenanordnung und Drehmomentübertragungsbaugruppe in axialer Folge angeordnet sind. Die Drehmomentübertragungsbaugruppe verfügt aufgrund einer Ausbildung als hydrodynamischer Drehmomentwandler über ein Pumpenrad, ein Turbinenrad und ein Leitrad. Während das Gehäuse als Antrieb der Drehmomentübertragungsbaugruppe dient, ist das Turbinenrad mit einer Getriebeeingangswelle verbunden, und somit als Abtrieb der Drehmomentübertragungsbaugruppe wirksam.

Durch Anordnung von Torsionsschwingungsdämpferanordnung, Auslenkungsmassenanordnung und Drehmomentübertragungsbaugruppe in axialer Folge wird für das Antriebssystem erheblich Bauraum benötigt.

Eine weitere als hydrodynamischer Drehmomentwandler ausgebildete Drehmomentübertragungsbaugruppe ist durch die DE 10 2004 004 176 A1 bekannt. Diese stellt zwei grundsätzliche Varianten der Anbindung einer Auslenkungsmassenanordnung vor, nämlich in einer ersten Variante die Anbindung der Auslenkungsmassenanordnung an die axiale Außenseite eines Gehäuses und damit einem Antrieb, wie einer Brennkraftmaschine, zugewandt, und in einer zweiten Variante abtriebsseitig der Drehmomentübertragungsbaugruppe. Bei der zweiten Variante ist die Auslenkungsmassenanordnung innerhalb des zwischen Pumpenrad, Turbinenrad und Leitrad gebildeten Innentorus und damit innerhalb des Gehäuses der Drehmomentübertragungsbaugruppe angeordnet, und mit dem Turbinenrad, also mit dem Abtrieb, drehfest.

Bei Anordnung der Auslenkungsmassenanordnung an der Außenseite des Gehäuses wird die axiale Erstreckung der Drehmomentübertragungsbaugruppe deutlich erhöht, während eine Anordnung der Auslenkungsmassenanordnung im Raum des Innentorus zwar bauraumneutral ist, aber lediglich eine geringe Dämpfungswirkung entfalten kann. Dies ist durch die Anordnung der Auslenkungsmassenanordnung im Innentorus bedingt, der zum einen in radialem Abstand zur radialen Außenseite des Gehäuses vorgesehen ist, und zum anderen nicht den Bauraum bietet, um wirkungsvolle Auslenkungsmassen unterbringen zu können. Die Ergänzung einer Torsionsschwingungsdämpferanordnung im Gehäuse dieser Variante der Drehmomentübertragungsbaugruppe erscheint daher sinnvoll.

Aus der DE 10 2013 225 601 A1 ist eine als nasslaufende Kupplung ausgebildete Drehmomentübertragungsbaugruppe bekannt, bei welcher eine Torsionsschwingungsdämpferanordnung und eine Auslenkungsmassenanordnung vorgesehen sind.

Die DE 11 2010 005 938 T5 offenbart einen hydrodynamischen Drehmomentwandler, welchem eine Torsionsschwingungsdämpferanordnung und eine im Drehmomentenfluss auf eine Überbrückungskupplung folgend angeordnete Auslenkungsmassenanordnung zugeordnet sind.

Die WO 2015/192842 A1 offenbart eine nasslaufende Lamellenkupplung mit einer im Drehmomentenfluss auf die jeweilige Reibflächenanordnungen bereitstellenden Lamellen folgend eine Auslenkungsmassenanordnung vorgesehen ist.

Es ist die Aufgabe der vorliegenden Erfindung, eine Drehmomentübertragungsbaugruppe derart auszugestalten, dass sie bei verbesserter Schwingungsdämpfungscharakteristik zu einem vereinfachten Aufbau eines Antriebssystems beiträgt. Erfindungsgemäß wird diese Aufgabe gelöst durch eine Drehmomentübertragungsbaugruppe gemäß Anspruch 1 oder Anspruch 8.

Die Drehmomentübertragungsbaugruppe ist dadurch gekennzeichnet, dass die Drehmomentübertragungsbaugruppe keine Torsionsschwingungsdämpferanordnung umfasst, oder/und dass der Auslenkungsmassenträger mit dem Gehäuse zur gemeinsamen Drehung um die Drehachse drehfest verbunden ist.

Mit dem erfindungsgemäßen Aufbau wird eine kompakt ausgestaltete Drehmomentübertragungsbaugruppe erreicht, bei welcher insbesondere durch die Ankopplung der Auslenkungsmassenanordnung an das Gehäuse, also einen im Drehmomentenfluss vor dem Reibflächenanordnungen liegenden Bereich, gewährleistet ist, dass eine Abstimmung der Auslenkungsmassenanordnung beispielsweise auf eine vorbestimmte Ordnung einer anregenden Schwingung beibehalten bleibt und eine Verstimmung und somit eine Beeinträchtigung des Dämpfungsvermögens vermieden wird. Gleichzeitig kann insbesondere dann, wenn die Reibflächenanordnungen im Schlupfbetrieb arbeiten, ein weiterer Beitrag zum Abbau von Schwingungen geliefert werden.

Für einen einfach zu realisierenden Aufbau kann das Gehäuse wenigstens zwei vorzugsweise durch Verschweißung miteinander verbundene Gehäuseteile umfassen, wobei ferner vorgesehen sein kann, dass der Auslenkungsmassenträger mit einem der Gehäuseteile drehfest verbunden ist, oder/und dass der Auslenkungsmassenträger im Angrenzungsbereich zweier Gehäuseteile aneinander mit dem Gehäuse drehfest oder/und axial fest verbunden ist.

Insbesondere dann, wenn bei nicht vorhandener Torsionsschwingungsdämpferanordnung im Gehäuse der Drehmomentübertragungsbaugruppe Bauraum zur Verfügung steht, kann, unabhängig von der konstruktiven Ausgestaltung des Gehäuses selbst, eine kompakte Bauweise dadurch erhalten werden, dass die Auslenkungsmassenanordnung im Inneren des Gehäuses angeordnet ist.

Zum Erhalt eines stabilen, gleichwohl einfach zu realisierenden Anbindung des Auslenkungsmassenträgers an das Gehäuse kann die Drehmomentübertragungsbaugruppe derart ausgebildet sein, dass der Auslenkungsmassenträger mit dem Gehäuse durch Vernietung, durch Verschweißung oder durch Verzahnung drehfest verbunden ist, oder dass der Auslenkungsmassenträger mit dem Gehäuse über ein Kopplungselement drehfest verbunden ist, wobei vorzugsweise der Auslenkungsmassenträger mit dem Kopplungselement durch Vernietung drehfest verbunden ist und das Kopplungselement mit dem Gehäuse durch Verschweißung oder Verzahnungseingriff drehfest verbunden ist, oder dass der Auslenkungsmassenträger mit dem Gehäuse durch Verzahnungseingriff oder Einpressen drehfest verbunden ist.

Die axiale Ankopplung des Auslenkungsmassenträgers an das Gehäuse kann vorzugsweise dadurch erreicht werden, dass der Auslenkungsmassenträger an einer im Angrenzungsbereich der beiden Gehäuseteile vorgesehenen Stirnfläche wenigstens eines der beiden Gehäuseteile in axialer Richtung abgestützt ist, oder/und dass ein den Auslenkungsmassenträger mit dem Gehäuse drehfest koppelndes Kopplungselement bezüglich des Gehäuses in wenigstens einer axialen Richtung abgestützt ist.

Bei einer hinsichtlich der Wirkung einer Auslenkungsmassenanordnung besonders vorteilhaften Ausgestaltung kann vorgesehen sein, dass im Drehmomentenfluss folgend auf die Reibflächenanordnungen keine Auslenkungsmassenanordnung vorgesehen ist. Durch das Anordnen einer Auslenkungsmassenanordnung ausschließlich im Drehmomentenfluss vor den Reibflächenanordnungen kann eine Verstimmung der im Allgemeinen auf eine Anregungsordnung eine Schwingung abgestimmten Auslenkungsmassenanordnung vermieden werden.

Es ist in diesem Zusammenhang darauf hinzuweisen, dass im Sinne der vorliegenden Erfindung das Anordnen im Drehmomentenfluss vordem Reibflächenanordnungen Bezug nimmt auf den im Antriebszustand vorhandenen Drehmomentenfluss von einem Antriebsaggregat über die Drehmomentübertragungsbaugruppe beispielsweise in ein Getriebe.

Bei einer alternativen Ausgestaltungsart kann vorgesehen sein, dass der Auslenkungsmassenträger mit dem Abtriebsorgan zur gemeinsamen Drehung um die Drehachse drehfest verbunden ist.

Für eine zuverlässige Übertragung auch vergleichsweise großer Drehmomente kann erfindungsgemäß vorgesehen sein, dass die antriebsseitige Reibflächenanordnung eine Mehrzahl von mit dem Gehäuse zur gemeinsamen Drehung um die Drehachse gekoppelten antriebsseitigen Reibelementen umfasst, dass die abtriebsseitige Reibflächenanordnung eine Mehrzahl von mit einem abtriebsseitigen Reibelemententräger zur gemeinsamen Drehung um die Drehachse gekoppelten abtriebsseitigen Reibelementen umfasst, und dass ein Anpresselement zum Gegeneinanderpressen der antriebsseitigen Reibelemente und der abtriebsseitigen Reibelemente vorgesehen ist.

Die Drehmomentübertragungsbaugruppe kann beispielsweise ein hydrodynamischer Drehmomentwandler mit einem mit dem Gehäuse um die Drehachse drehbaren Pumpenrad, einem in dem Gehäuse angeordneten und mit dem Abtriebsorgan zur gemeinsamen Drehung um die Drehachse verbundenen Turbinenrad und einem Leitrad sein.

Bei einer alternativen Ausgestaltungsart kann die Drehmomentübertragungsbaugruppe eine nasslaufende Kupplung sein.

Die Erfindung betrifft ferner ein Antriebssystem, umfassend:
- ein Zweimassenschwungrad mit einer an ein Antriebsaggregat anzukoppelnden oder angekoppelte Primärseite und einer mit der Primärseite über eine Dämpferelementenanordnung zur Drehmomentübertragung gekoppelte Sekundärseite,
- eine erfindungsgemäß aufgebaute Drehmomentübertragungsbaugruppe, wobei das Gehäuse der Drehmomentübertragungsbaugruppe mit der Sekundärseite des Zweimassenschwungrads zur gemeinsamen Drehung um die Drehachse gekoppelt ist.

In das erfindungsgemäß aufgebaute Antriebssystem kann ferner eine Elektromaschine integriert sein mit einer Statoranordnung und einer mit der Sekundärseite des Zweimassenschwungrads und dem Gehäuse der Drehmomentübertragungsbaugruppe zur gemeinsamen Drehung um die Drehachse gekoppelten Rotoranordnung.

In einem derartigen Antriebssystem bzw. einem damit aufgebauten Antriebsstrang ist vorzugsweise im Drehmomentenfluss folgend auf die Reibflächenanordnungen keine Auslenkungsmassenanordnung vorgesehen.

Die vorliegende Erfindung wird nachfolgend mit Bezug auf die beiliegenden Figuren detailliert beschrieben. Es zeigt:
- Fig. 1: ein Antriebssystem mit einem Zweimassenschwungrad, einer Elektromaschine und einer als hydrodynamischer Drehmomentwandler ausgebildeten Drehmomentübertragu ngsbaugruppe;
- Fig. 2: eine Teil-Längsschnittansicht einer ersten Ausgestaltungsart einer Drehmomentübertragungsbaugruppe mit einer Auslenkungsmassenanordnung;
- Fig. 3: eine der Fig. 2 entsprechende Ansicht einer alternativen Ausgestaltungsart einer Drehmomentübertragungsbaugruppe;
- Fig. 4: in ihren Darstellungen a), b) und c) verschiedene Arten der Anbindung eines Auslenkungsmassenträgers an ein Gehäuse der Drehmomentübertragungsbaugruppe der Fig. 3;
- Fig. 5: eine weitere der Fig. 2 entsprechende Darstellung einer alternativen Ausgestaltungsart einer Drehmomentübertragungsbaugruppe;
- Fig. 6: eine weitere der Fig. 2 entsprechende Darstellung einer alternativen Ausgestaltungsart einer Drehmomentübertragungsbaugruppe;
- Fig. 7: eine weitere der Fig. 2 entsprechende Darstellung einer alternativen Ausgestaltungsart einer Drehmomentübertragungsbaugruppe;
- Fig. 8: eine weitere der Fig. 2 entsprechende Darstellung einer alternativen Ausgestaltungsart einer Drehmomentübertragungsbaugruppe.

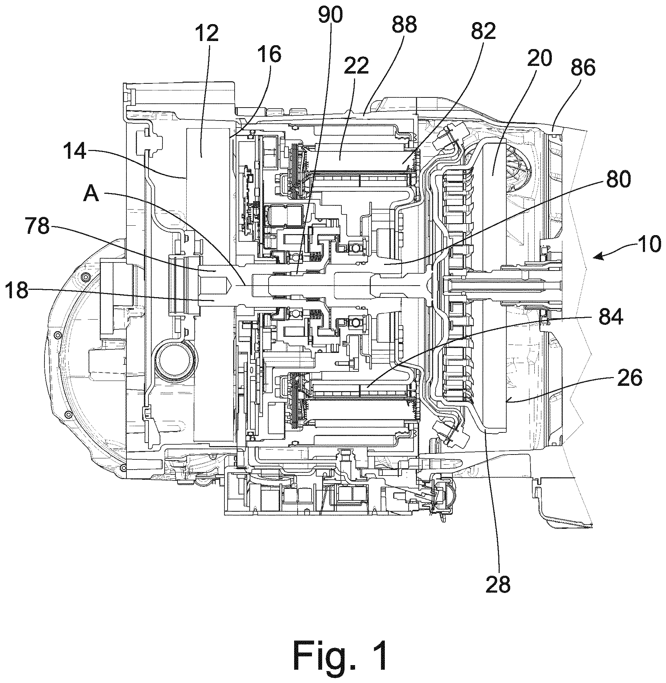

In Fig. 1 ist ein im Antriebsstrang eines Fahrzeugs einsetzbares Antriebssystem allgemein mit 10 bezeichnet. Das Antriebssystem 10 umfasst ein Zweimassenschwungrad 12, das mit einer nur andeutungsweise gezeigten Primärseite 14 an ein Antriebsaggregat, beispielsweise eine Kurbelwelle einer Brennkraftmaschine, angekoppelt werden kann und dessen ebenfalls nur andeutungsweise gezeigte Sekundärseite über eine Mehrzahl von Dämpferelementen, beispielsweise Dämpferfedern, mit der Primärseite 14 zur Drehmomentübertragung gekoppelt ist. Die Sekundärseite 16 ist über eine Kopplungswellenanordnung 18 mit einer allgemein mit 20 bezeichneten Drehmomentübertragungsbaugruppe zur gemeinsamen Drehung um eine Drehachse A gekoppelt, wobei die Drehmomentübertragungsbaugruppe 20, wie im Folgenden noch beschrieben, als Anfahrelement wirksam sein kann, um den Drehmomentenfluss in einem Antriebsstrang zu unterbrechen bzw. herzustellen. Die Kopplungswellenanordnung 18 kann beispielsweise eine mit der Sekundärseite 16 des Zweimassenschwungrads drehfest gekoppelte erste Koppelwelle 78 und eine mit der Drehmomentübertragungsbaugruppe 20 drehfest gekoppelte zweite Koppelwelle 80 umfassen. Die beiden Koppelwellen 78, 80 können axial ineinander eingeschoben und durch eine Kopplungsanordnung 90, beispielsweise Klauenkupplung, wahlweise zur gemeinsamen Drehung miteinander gekoppelt werden.

An die zweite Koppelwelle 80 ist eine Rotoranordnung 82 einer allgemein mit 22 bezeichneten Elektromaschine angebunden, deren Statoranordnung 84 an einer feststehenden Baugruppe, beispielsweise einem die Elektromaschine 22 umgebenden und an ein Getriebegehäuse 86 anschließend angeordneten Gehäuse 88, getragen ist.

Soll ein Drehmoment von einem Antriebsaggregat, also beispielsweise einer Brennkraftmaschine, über das Zweimassenschwungrad 12 auf die Drehmomentübertragungsbaugruppe 20 übertragen werden, werden die beiden Koppelwellen 78, 80 durch die Kopplungsanordnung 90 zur gemeinsamen Drehung miteinander gekoppelt. In diesem Zustand kann die Elektromaschine 22 ein unterstützendes Drehmoment liefern. Soll ein Fahrzeug rein elektromotorisch betrieben werden, können die beiden Koppelwellen 78,80 voneinander entkoppelt werden, so dass das Zweimassenschwungrad 12 und das damit verbundene Antriebsaggregat vom folgenden Teil des Antriebsstrangs entkoppelt sind und die Elektromaschine 22 das gesamte Antriebsdrehmoment über die Koppelwelle 80 und die Drehmomentübertragungsbaugruppe 20 in den Antriebsstrang einleitet.

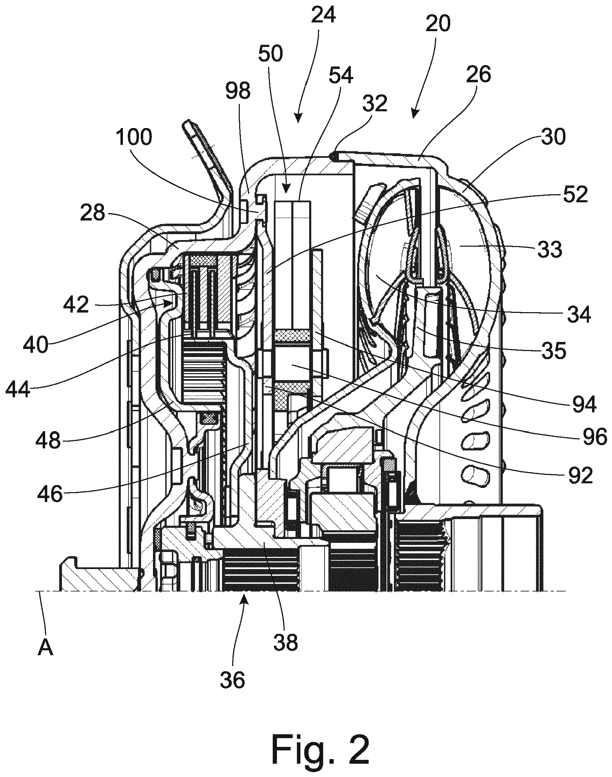

Die in Fig. 2 detaillierter dargestellte Drehmomentübertragungsbaugruppe 20 ist in diesem Ausgestaltungsbeispiel in Form eines hydrodynamischen Drehmomentwandlers 24 aufgebaut. Die Drehmomentübertragungsbaugruppe 20 umfasst ein mit Fluid, z.B. Öl, gefülltes bzw. füllbares Gehäuse 26 mit zwei schalenartig ausgebildeten Gehäuseteilen 28, 30. Diese sind in ihrem radial äußeren Bereich durch Verschweißung 32 miteinander fest verbunden. Das Gehäuseteil 28 ist in dem in Fig. 1 dargestellten Antriebssystem 10 über die Kopplungswellenanordnung 18 an die Sekundärseite 16 des Zweimassenschwungrads 12 angekoppelt und damit zur gemeinsamen Drehung um die Drehachse A im Wesentlichen drehfest verbunden. Am Gehäuse 26 ist ein allgemein mit 33 bezeichnetes Pumpenrad mit einer Mehrzahl von in Umfangsrichtung aufeinanderfolgenden Pumpenradschaufeln vorgesehen. Im Inneren des Gehäuses 26 ist ein Turbinenrad 34 mit einer Mehrzahl von in Umfangsrichtung aufeinanderfolgenden Turbinenradschaufeln vorgesehen, das mit einer als Abtriebsorgan 36 wirksamen Nabe 38 drehfest verbunden ist. Im radial inneren Bereich liegt zwischen dem Pumpenrad 33 und dem Turbinenrad 34 ein Leitrad 35 mit einer Mehrzahl von in Umfangsrichtung aufeinanderfolgenden Leitradradschaufeln.

Eine allgemein mit 40 bezeichnete Überbrückungskupplung stellt mit einer Mehrzahl von antriebsseitigen Reibelementen 42, allgemein auch als Lamellen bezeichnet, eine antriebsseitige Reibflächenanordnung bereit. Die antriebsseitigen Reibelemente 42 sind in ihrem radial äußeren Bereich durch Verzahnungseingriff mit dem Gehäuseteil 28 des Gehäuses 26 zur gemeinsamen Drehung um die Drehachse A gekoppelt. Eine Mehrzahl abtriebsseitiger Reibelemente 44 stellt eine abtriebsseitige Reibflächenanordnung bereit, wobei die abtriebsseitigen Reibelemente 44 in ihrem radial inneren Bereich durch Verzahnungseingriff mit einem abtriebsseitigen Reibelemententräger 46 zur gemeinsamen Drehung um die Drehachse A gekoppelt sind. Der abtriebsseitige Reibelemententräger 46 ist an die als Abtriebsorgan 36 wirksame Nabe 38 drehfest angebunden.

Durch einen im Gehäuse 26 vorgesehenen, mit Druckfluid beaufschlagbaren und als Anpresselement 48 wirksamen Kupplungskolben können die in Richtung der Drehachse A alternierend aufeinanderfolgend angeordneten antriebsseitigen Reibelemente 42 und abtriebsseitigen Reibelemente 44 gegeneinander gepresst werden, um somit das Gehäuse 26 mit dem Abtriebsorgan 36, also der Nabe 38, zur Drehmomentübertragung zu verbinden.

In dem Gehäuse 26 ist ferner eine allgemein auch als drehzahladaptiver Tilger bezeichnete Auslenkungsmassenanordnung 50 vorgesehen. Diese umfasst einen Auslenkungsmassenträger 52, an dem mehrere Auslenkungsmassen 54 in Umfangsrichtung um die Drehachse A aufeinanderfolgend derart getragen sind, dass sie im Drehzustand fliehkraftbedingt nach radial außen in eine Grund-Relativlage bezüglich des Auslenkungsmassenträgers 52 vorgespannt sind und bei Auftreten von Drehungleichförmigkeiten bezüglich diesem aus der Grund-Relativlage in Umfangsrichtung ausgelenkt und dabei nach radial innen, also auf die Drehachse A zu, gezwungen werden.

Der Auslenkungsmassenträger 52 umfasst zwei miteinander z.B. durch Vernietung fest verbundene Scheiben 92, 94, die axial zwischen sich die Auslenkungsmassen 54 aufnehmen. Jede Auslenkungsmasse 54 ist über wenigstens zwei Führungsbolzen 96 mit dem Auslenkungsmassenträger 52 gekoppelt. In Zuordnung zu jedem Führungsbolzen 96 ist an den Auslenkungsmassen 54 sowie den Scheiben 92, 94 jeweils eine gekrümmte Führungsbahn mit einem Scheitelbereich vorgesehen. Die Führungsbahnen in den Auslenkungsmassen 54 weisen jeweils einen radial innen liegenden Scheitelbereich auf, und die Führungsbahnen in den Scheiben 92, 94 weisen jeweils einen radial außen liegenden Scheitelbereich auf. Bei Fliehkrafteinwirkung verlagern die Auslenkungsmassen 54 sich in die Grund-Relativlage bezüglich des Auslengsmassenträgers 52 mit maximalem Abstand zur Drehachse A, so dass die Führungsbolzen 96 in den Scheitelbereichen der mit diesen jeweils zusammenwirkenden Führungsbahnen liegen. Bei Auftreten von Drehschwingungen werden die Auslenkungsmassen 54 in Umfangsrichtung bezüglich des Auslenkungsmassenträger 52 beschleunigt bzw. bewegt, so dass die Führungsbolzen 96 sich entlang der nach radial außen gekrümmten Führungsbahnen in den Auslenkungsmassen 54 und entlang der nach radial innen gekrümmten Führungsbahnen in den Scheiben 92, 94 bewegen und somit die Auslenkungsmassen im Fliehpotential nach radial innen zwingen.

Der Auslenkungsmassenträger 52 ist im dargestellten Ausgestaltungsbeispiel durch Vernietung an das Gehäuseteil 28 des Gehäuses 26 drehfest angebunden. Somit ist die Auslenkungsmassenanordnung 50 im Drehmomentenfluss - bezogen auf einen Antriebszustand, bei welchem ein Drehmoment von einem Antriebsaggregat über das Antriebssystem 10 der Fig. 1 auf angetriebene Räder übertragen wird - vor der Überbrückungskupplung 42 angeordnet.

Für die Nietverbindung sind am Gehäuseteil 28 in einem radial außerhalb der Überbrückungskupplung 40 nach radial außen sich erstreckenden Wandungsbereich 98 integral angeformte Niete 100 vorgesehen, welche durch zugeordnete Öffnungen in der Scheibe 92 des Auslenkungsmassenträgers 52 hindurchgeführt und umgeformt sind. Somit können zu Undichtigkeiten führende Öffnungen im Gehäuse 26 vermieden werden.

Man erkennt in Fig. 2, dass bei der erfindungsgemäß aufgebauten Drehmomentübertragungsbaugruppe 20 bzw. einem diese umfassenden Antriebssystem 10 die Drehmomentübertragungsgruppe 20 keine Torsionsschwingungsdämpferanordnung aufweist. Es sei hier darauf hingewiesen, dass in diesem Sinne eine Torsionsschwingungsdämpferanordnung eine Baugruppe ist, welche eine Primärseite und eine Sekundärseite und eine die Primärseite mit der Sekundärseite koppelnde Dämpferelementenanordnung, wie z. B. eine Mehrzahl von Federn, umfasst, um über diese Baugruppe ein Drehmoment übertragen zu können und dabei Drehschwingungen durch Verformung der Dämpferelemente der Dämpferelementenanordnung dämpfen zu können. Da bei dem erfindungsgemäßen Aufbau einer Drehmomentübertragungsbaugruppe 20 eine derartige Torsionsschwingungsdämpferanordnung in der Drehmomentübertragungsbaugruppe 20 selbst nicht vorgesehen ist, ist ausreichend Bauraum für eine grundsätzlich nicht im Drehmomentenfluss liegende, also kein Drehmoment übertragende Auslenkungsmassenanordnung 50 vorhanden. Der Aufbau der Drehmomentübertragungsbaugruppe 20 ist somit vergleichsweise einfach. Die grundsätzlich durch eine Torsionsschwingungsdämpferanordnung vorgesehene Dämpfungswirkung übernimmt bei dem erfindungsgemäßen Aufbau eines Antriebssystems 10 das im Drehmomentenfluss - bezogen auf einen Antriebszustand - vor der Drehmomentübertragungsbaugruppe 20 liegende Zweimassenschwungrad 12.

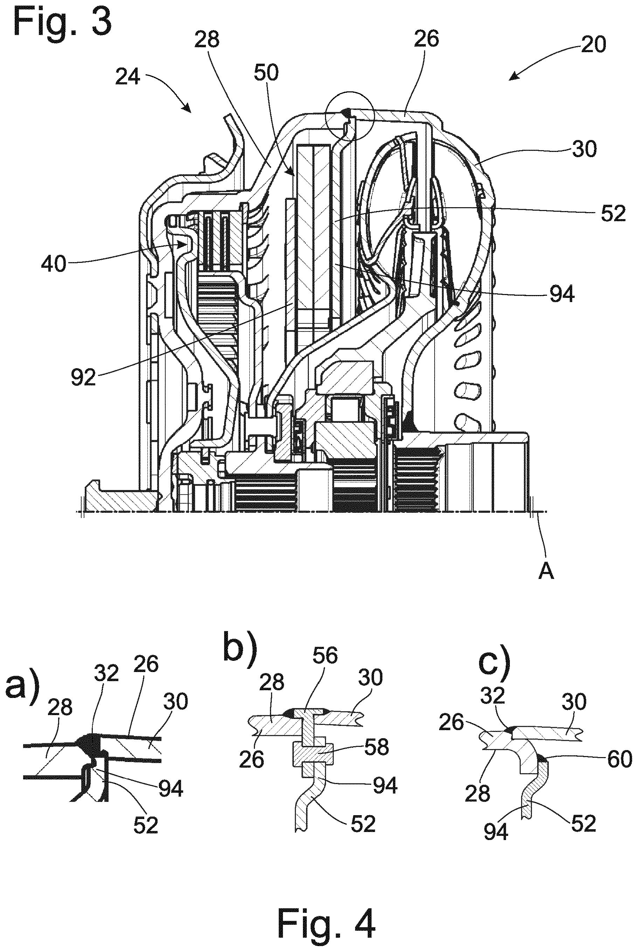

In den Fig. 3 und 4 ist eine alternative Art der Anbindung der Auslenkungsmassenanordnung 50 an das Gehäuse 26 dargestellt. Man erkennt in den Fig. 3 und 4a), dass der Auslenkungsmassenträger 52 in einem Angrenzungsbereich der beiden Gehäuseteile 28, 30 aneinander an diese angebunden ist. Dabei zeigt die Fig. 4a), dass der Auslenkungsmassenträger 52 mit seiner Scheibe 94 in seinem radial äußeren Bereich durch Verschweißung an die beiden Gehäuseteile 28, 30 angebunden ist, beispielsweise durch die Verschweißung 32, über welche die beiden Gehäuseteile 28, 30 miteinander verbunden sind. Die Fig. 4b) zeigt den Einsatz eines Kopplungselements 56, welches im Angrenzungsbereich der beiden Gehäuseteile 28, 30 zwischen diesen positioniert ist und sowohl mit dem Gehäuseteil 28, als auch dem Gehäuseteil 30 durch Verschweißung verbunden ist. Das mit allgemein T-artiger Querschnittsstruktur bereitgestellte, ringartige Kopplungselement 56 greift nach radial innen und ist in seinem innerhalb des Gehäuses 26 liegenden Bereich mit dem Auslenkungsmassenträger 52, insbesondere der Scheibe 94, beispielsweise durch eine Mehrzahl von Nietbolzen 58 drehfest verbunden. Die Fig. 4c) zeigt eine Ausgestaltung, bei welcher das Gehäuseteil 28 in seinem an das Gehäuseteil 30 angrenzenden Bereich nach radial innen umgeformt ist. In diesem nach radial innen umgeformten Bereich ist der Auslenkungsmassenträger 52 mit seiner Scheibe 94 durch Verschweißung 60, beispielsweise eine Mehrzahl von in Umfangsrichtung aufeinanderfolgenden Schweißpunkten oder eine in Umfangsrichtung umlaufende Schweißnaht, an das Gehäuseteil 28 drehfest angebunden.

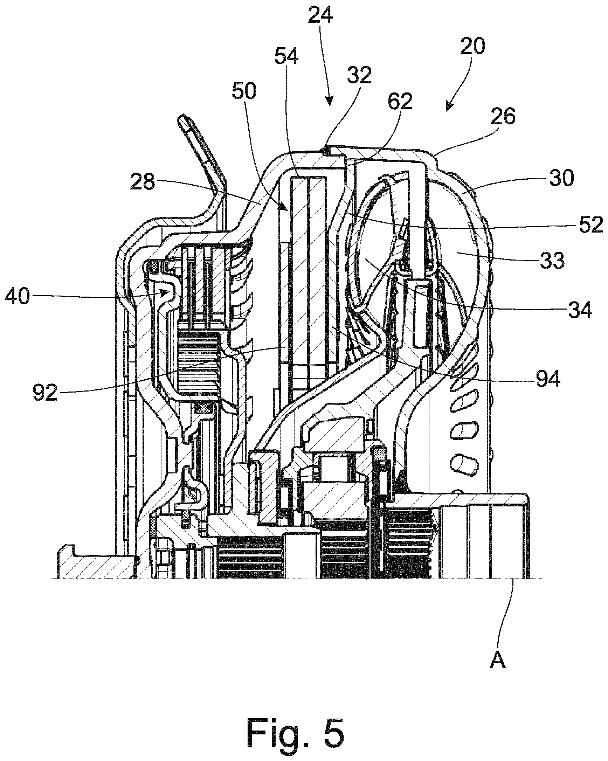

Die Fig. 5 zeigt eine Ausgestaltungsart, bei welcher der Auslenkungsmassenträger im Angrenzungsbereich der beiden Gehäuseteile 28, 30 axial auf das Gehäuseteil 28 folgend und im Inneren des Gehäuseteils 30 angeordnet ist. Dabei ist der Auslenkungsmassenträger 52 beispielsweise mit seiner Scheibe 94 in das in seinem radial äußeren Bereich beispielsweise konisch geformte Gehäuseteil 30 eingepresst. Beim Aufeinanderzubewegen der beiden Gehäuseteile 28, 30 kommt der Auslenkungsmassenträger 52 in axiale Anlage an einer Stirnfläche 62 des Gehäuseteils 28 und ist somit durch Einpressen in das Gehäuseteil 30 einerseits und durch axiale Anlage an der Stirnfläche 62 des Gehäuseteils 28 andererseits bezüglich des Gehäuses 26 drehfest und auch axial festgehalten. Um die drehfeste Anbindung zu unterstützen, kann alternativ oder zusätzlich zu dem durch Einpressen generierten Reibschluss zwischen dem Auslenkungsmassenträger 52, also beispielsweise der Scheibe 94, und dem Gehäuseteil 26 auch ein Verzahnungseingriff, beispielsweise durch Bereitstellen einer Miniaturverzahnung am Außenumfang der Scheibe 94 des Auslenkungsmassenträgers 52, welche sich in das Material des im Allgemeinen aus Blech aufgebauten Gehäuseteils 30 eingräbt, erzeugt werden.

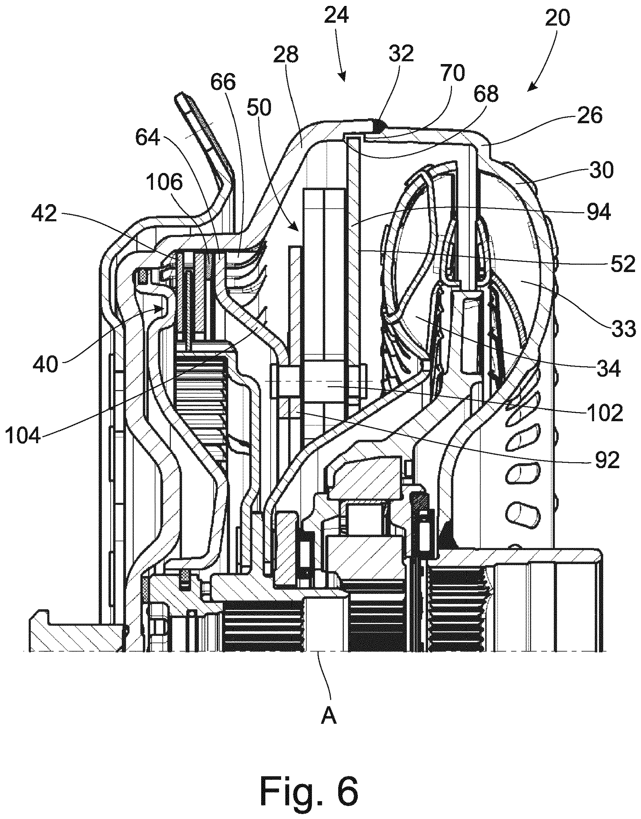

Bei der in Fig. 6 dargestellten Ausgestaltungsart ist der Auslenkungsmassenträger 52 im Außenumfangsbereich der Scheibe 94 zur axial festen Positionierung des Auslenkungsmassenträgers 52 ausgebildet. Das Gehäuseteil 28 weist eine Radialstufe 68 auf, an welcher der Auslenkungsmassenträger 52 in Richtung auf das Gehäuseteil 28 zu axial anliegt bzw. anliegen kann. In der anderen axialen Richtung ist der Auslenkungsmassenträger 52 durch eine Stirnfläche 70 des Gehäuseteils 30 axial festgehalten. Weiterhin zeigt Fig. 6, dass eine axiale Halterung in Richtung auf das Gehäuseteil 28 zu durch die axiale Abstützung des Kopplungselements 104 an einem Sicherungsring 106 erreicht wird, der als axiales Widerlager für die antriebsseitigen Reibelemente 42 am Gehäuseteil 28 im Bereich der Verzahnung 66 festgelegt ist.

Die drehfeste Kopplung mit dem Gehäuse 26 erfolgt über ein mit den Scheiben 92, 94 durch diese miteinander verbindende Nietbolzen102 fest verbundenes, z.B. scheibenartiges Kopplungselement 104. Dieses greift mit einer daran ausgebildeten Verzahnung 64 in eine am Gehäuse 26 ausgebildete Verzahnung 66 ein. Über die Verzahnung 66 sind vorzugsweise auch die antriebsseitigen Reibelement 42 drehfest an das Gehäuse 26 angekoppelt.

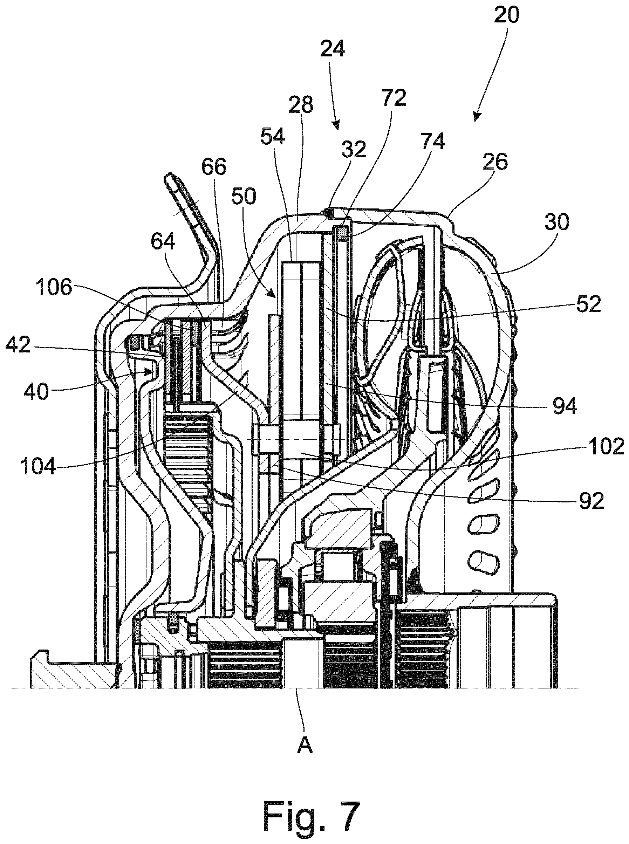

Bei der in Fig. 7 dargestellten Ausgestaltungsart ist der Auslenkungsmassenträger 52 wiederum durch Verzahnungseingriff des Kopplungselements 104 in seinem radial äußeren Bereich mit der am Gehäuseteil 28 vorgesehenen Verzahnung 66 zur Drehung mit dem Gehäuse 26 gekoppelt. Wie bereits in Fig. 6, erfolgt auch bei der Lösung gemäß Fig. 7 eine axiale Halterung in Richtung auf das Gehäuseteil 28 zu durch die axiale Abstützung des Kopplungselements 104 an einem Sicherungsring 106, der als axiales Widerlager für die antriebsseitigen Reibelemente 42 am Gehäuseteil 28 im Bereich der Verzahnung 66 festgelegt ist. In Richtung auf das Gehäuseteil 30 zu wird der Auslenkungsmassenträger 52 durch einen in das Gehäuseteil 28 in eine darin vorgesehene Innenumfangsnut 72 eingesetzten Sicherungsring 74 axial festgehalten.

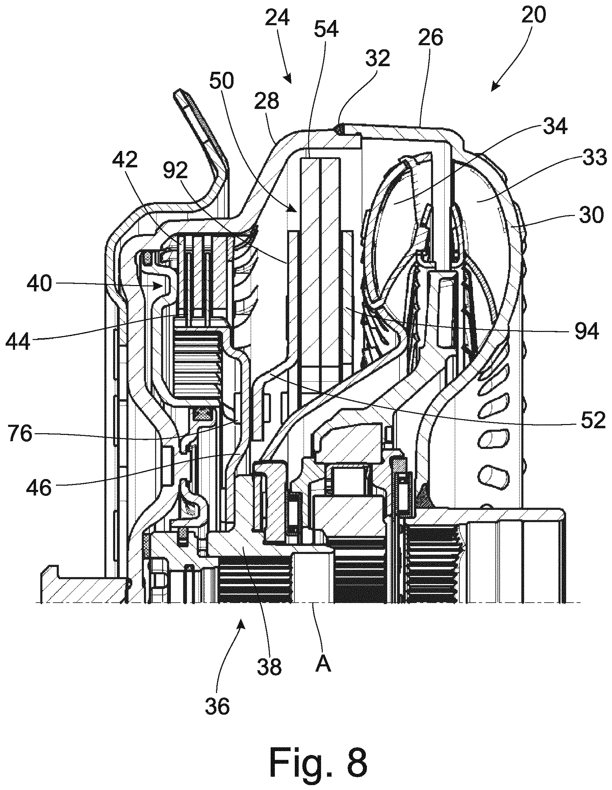

Die Fig. 8 zeigt eine Ausgestaltungsart, bei welcher die Auslenkungsmassenanordnung 50 bezüglich der Überbrückungskupplung 40 nicht antriebsseitig, sondern abtriebsseitig angekoppelt ist. Im dargestellten Beispiel ist der Auslenkungsmassenträger 52 mit seiner Scheibe 92 beispielsweise durch eine Mehrzahl von Nietbolzen 76 mit dem abtriebsseitigen Reibelemententräger 46 drehfest und auch axial fest gekoppelt, so dass über dem abtriebsseitigen Reibelemententräger 46 der Auslenkungsmassenträger 52 und somit die Auslenkungsmassenanordnung 50 an das Abtriebsorgan 36, also die Nabe 38, angekoppelt ist.

Mit der erfindungsgemäßen Drehmomentübertragungsanordnung wird ein einfach realisierbarer Aufbau bei reduzierter Bauteilezahl bereitgestellt, da die Drehmomentübertragungsbaugruppe selbst keine Torsionsschwingungsdämpferanordnung, sondern nur die Auslenkungsmassenanordnung umfasst. Insbesondere dann, wenn die Auslenkungsmassenanordnung bezüglich der in Reibeingriff miteinander bringbaren Reibflächenanordnungen der Überbrückungskupplung 40 im Drehmomentenfluss stromaufwärts, also vor der Überbrückungskupplung 40 angekoppelt ist, kann die auch im Schlupfbetrieb betreibbare Überbrückungskupplung effizient zum Bereitstellen einer Dämpfungsfunktion genutzt werden, ohne dass die Gefahr einer Verstimmung der grundsätzlich auf eine anregende Ordnung einer Schwingung abgestimmten Auslenkungsmassenanordnung besteht. Durch den Verzicht auf eine Torsionsschwingungsdämpferanordnung in der Drehmomentübertragungsbaugruppe kann diese kompakt aufgebaut werden und somit zum Aufbau eines grundsätzlich kompakten, gleichwohl eine gute Drehschwingungsdämpfungscharakteristik bereitstellenden Antriebssystems beitragen.

Es sei abschließend darauf hingewiesen, dass eine derartige Drehmomentübertragungsbaugruppe nicht notwendigerweise als hydrodynamischer Drehmomentwandler aufgebaut sein muss. Auch ein Aufbau als nasslaufende Kupplungsanordnung, bei welcher, ähnlich wie bei einem hydrodynamischen Drehmomentwandler, das Gehäuse mit einem Fluid, beispielsweise Öl, gefüllt ist, und bei welcher zur Drehmomentübertragung, ähnlich wie in einem hydrodynamischen Drehmomentwandler, antriebsseitige und abtriebsseitige Reibelemente alternierend angeordnet und gegeneinander pressbar sind, kann unter Beibehalt der Prinzipien der vorliegenden Erfindung, also des Bereitstellens nur einer Auslenkungsmassenanordnung oder/und einer bezüglich der in Reibeingriff miteinander zu bringenden Reibflächenanordnungen vorzugsweise antriebsseitig angekoppelten Auslenkungsmassenanordnung, ist möglich.

### Bezugszeichen

- 10: Antriebssystem
- 12: Zweimassenschwungrad
- 14: Primärseite
- 16: Sekundärseite
- 18: Kopplungswellenanordnung
- 20: Drehmomentübertragungsbaugruppe
- 22: Elektromaschine
- 24: hydrodynamischer Drehmomentwandler
- 26: Gehäuse
- 28: Gehäuseteil
- 30: Gehäuseteil
- 32: Verschweißung
- 33: Pumpenrad
- 34: Turbinenrad
- 35: Leitrad
- 36: Abtriebsorgan
- 38: Nabe
- 40: Überbrückungskupplung
- 42: antriebsseitige Reibelemente
- 44: abtriebsseitige Reibelemente
- 46: abtriebsseitiger Reibelemententräger
- 48: Anpresselement
- 50: Auslenkungsmassenanordnung
- 52: Auslenkungsmassenträger
- 54: Auslenkungsmasse
- 56: Kopplungselement
- 58: Nietbolzen
- 60: Verschweißung
- 62: Stirnfläche
- 64: Verzahnung
- 66: Verzahnung
- 68: Radialstufe
- 70: Stirnfläche
- 72: Innenumfangsnut
- 74: Sicherungsring
- 76: Nietbolzen
- 78: erste Koppelwelle
- 80: zweite Koppelwelle
- 82: Rotoranordnung
- 84: Statoranordnung
- 86: Getriebegehäuse
- 88: Gehäuse
- 90: Klauenkupplung
- 92: Scheibe
- 94: Scheibe
- 96: Führungsbolzen
- 98: Wandungsbereich
- 100: Niet
- 102: Nietbolzen
- 104: Kopplungselement
- 106: Sicherungsring
- A: Drehachse

## Patentansprüche

1. Drehmomentübertragungsbaugruppe für ein Antriebssystem eines Fahrzeugs, umfassend ein Gehäuse (26), an dem ein Pumpenrad (33) vorgesehen ist, und im Inneren des Gehäuses (26) ein Turbinenrad (34) vorgesehen ist, eine mit dem Gehäuse (26) zur gemeinsamen Drehung um eine Drehachse (A) gekoppelte antriebsseitige Reibflächenanordnung, eine mit einem Abtriebsorgan (36) zur gemeinsamen Drehung um die Drehachse (A) gekoppelte und in Reibeingriff mit der antriebsseitigen Reibflächenanordnung bringbare abtriebsseitige Reibflächenanordnung und eine Auslenkungsmassenanordnung (50) mit einem Auslenkungsmassenträger (52) und wenigstens einer an dem Auslenkungsmassenträger (52) getragenen und bezüglich des Auslenkungsmassenträgers (52) aus einer Grund-Relativlage auslenkbaren Auslenkungsmasse (54), wobei der Auslenkungsmassenträger (52) mit dem Gehäuse (26) zur gemeinsamen Drehung um die Drehachse (A) drehfest verbunden ist, **dadurch gekennzeichnet, dass** die Auslenkungsmassenanordnung (50) im Inneren des Gehäuses (26) angeordnet ist.

2. Drehmomentübertragungsbaugruppe nach Anspruch 1, **dadurch gekennzeichnet,**
**dass** der Auslenkungsmassenträger (52) im Angrenzungsbereich zweier Gehäuseteile (28, 30) aneinander mit dem Gehäuse (26) drehfest oder/und axial fest verbunden ist.

3. Drehmomentübertragungsbaugruppe noch Anspruch 2, **dadurch gekennzeichnet, dass** der Auslenkungsmassenträger (52) mit dem Gehäuse (26) durch Vernietung, durch Verschweißung, durch Einpressen oder durch Verzahnungseingriff drehfest verbunden ist.

4. Drehmomentübertragungsbaugruppe noch Anspruch 2, **dadurch gekennzeichnet, dass** der Auslenkungsmassenträger (52) mit dem Gehäuse (26) über ein Kopplungselement (56; 104) drehfest verbunden ist.

5. Drehmomentübertragungsbaugruppe noch Anspruch 4, **dadurch gekennzeichnet, dass** der Auslenkungsmassenträger (52) mit dem Kopplungselement (56; 104) durch Vernietung drehfest verbunden ist, und das Kopplungselement (56) mit dem Gehäuse (26) durch Verschweißung oder Verzahnungseingriff drehfest verbunden ist.

6. Drehmomentübertragungsbaugruppe nach einem der Ansprüche 1 bis 5, **dadurch gekennzeichnet, dass** durch den Auslenkungsmassenträger (52) an einer im Angrenzungsbereich der beiden Gehäuseteile (28, 30) vorgesehenen Stirnfläche (62; 68, 70) wenigstens eines der beiden Gehäuseteile (28, 30) in axialer Richtung abgestützt ist, oder/und dass ein den Auslenkungsmassenträger (52) mit dem Gehäuse (26) drehfest koppelndes Kopplungselement (56; 104) bezüglich des Gehäuses (26) in wenigstens einer axialen Richtung abgestützt ist.

7. Drehmomentübertragungsbaugruppe nach einem der vorangehenden Ansprüche, **dadurch gekennzeichnet, dass** im Drehmomentenfluss folgend auf die Reibflächenanordnungen keine Auslenkungsmassenanordnung vorgesehen ist.

8. Drehmomentübertragungsbaugruppe für ein Antriebssystem eines Fahrzeugs, umfassend ein Gehäuse (26), an dem ein Pumpenrad (33) vorgesehen ist, und im Inneren des Gehäuses (26) ein Turbinenrad (34) vorgesehen ist, eine mit dem Gehäuse (26) zur gemeinsamen Drehung um eine Drehachse (A) gekoppelte antriebsseitige Reibflächenanordnung, eine mit einem Abtriebsorgan (36) zur gemeinsamen Drehung um die Drehachse (A) gekoppelte und in Reibeingriff mit der antriebsseitigen Reibflächenanordnung bringbare abtriebsseitige Reibflächenanordnung und eine Auslenkungsmassenanordnung (50) mit einem Auslenkungsmassenträger (52) und wenigstens einer an dem Auslenkungsmassenträger (52) getragenen und bezüglich des Auslenkungsmassenträgers (52) aus einer Grund-Relativlage auslenkbaren Auslenkungsmasse (54), wobei jede Auslenkungsmasse (54) über wenigstens zwei Führungsbolzen (96) mit dem Auslenkungsmassenträger (52) gekoppelt ist, indem die Führungsbolzen (96) sich entlang der gekrümmten Führungsbahnen im Auslenkungsmassenträger (52) und in Auslenkungsmassen (54) bewegen, **dadurch gekennzeichnet, dass** die Auslenkungsmassenanordnung (50) im Inneren des Gehäuses (26) angeordnet ist und dass der Auslenkungsmassenträger (52) mit dem Abtriebsorgan (36) zur gemeinsamen Drehung um die Drehachse (A) drehfest verbunden ist.

9. Drehmomentübertragungsbaugruppe nach Anspruch 1 oder 9, **dadurch gekennzeichnet, dass** die Drehmomentübertragungsbaugruppe (20) keine Torsionsschwingungsdämpferanordnung umfasst.

10. Drehmomentübertragungsbaugruppe nach einem der vorangehenden Ansprüche, **dadurch gekennzeichnet, dass** die antriebsseitige Reibflächenanordnung eine Mehrzahl von mit dem Gehäuse zur gemeinsamen Drehung um die Drehachse (A) gekoppelten antriebsseitigen Reibelementen (42) umfasst, dass die abtriebsseitige Reibflächenanordnung eine Mehrzahl von mit einem abtriebsseitigen Reibelemententräger (46) zur gemeinsamen Drehung um die Drehachse (A) gekoppelten abtriebsseitigen Reibelementen (44) umfasst, und dass ein Anpresselement (48) zum Gegeneinanderpressen der antriebsseitigen Reibelemente (42) und der abtriebsseitigen Reibelemente (44) vorgesehen ist.

11. Antriebssystem, umfassend:
- ein Zweimassenschwungrad mit einer an ein Antriebsaggregat anzukoppelnden oder angekoppelte Primärseite (14) und einer mit der Primärseite (14) über eine Dämpferelementenanordnung zur Drehmomentübertragung gekoppelte Sekundärseite (16),
- eine Drehmomentübertragungsbaugruppe (20) nach einem der vorangehenden Ansprüche, wobei das Gehäuse (26) der Drehmomentübertragungsbaugruppe (20) mit der Sekundärseite (16) des Zweimassenschwungrads (12) zur gemeinsamen Drehung um die Drehachse (A) gekoppelt ist.

12. Antriebssystem nach Anspruch 11, **dadurch gekennzeichnet, dass** eine Elektromaschine (22) mit einer Statoranordnung (84) und einer mit der Sekundärseite (16) des Zweimassenschwungrads (12) und dem Gehäuse (26) der Drehmomentübertragungsbaugruppe (20) zur gemeinsamen Drehung um die Drehachse (A) gekoppelten Rotoranordnung (82) vorgesehen ist.

13. Antriebssystem nach Anspruch 11 oder 12, **dadurch gekennzeichnet, dass** im Drehmomentenfluss folgend auf die Reibflächenanordnungen der Drehmomentübertragung Baugruppe (20) keine Auslenkungsmassenanordnung vorgesehen ist.

## Claims

1. Torque transmission assembly for a drive system of a vehicle, comprising a housing (26), on which a pump impeller (33) is provided, and in the interior of which housing (26) a turbine impeller (34) is provided, a drive-side friction face arrangement which is coupled to the housing (26) for joint rotation about a rotational axis (A), an output-side friction face arrangement which is coupled to an output member (36) for joint rotation about the rotational axis (A) and can be brought into frictional engagement with the drive-side friction face arrangement, and a deflection mass arrangement (50) with a deflection mass carrier (52) and at least one deflection mass (54) which is supported on the deflection mass carrier (52) and can be deflected out of a basic relative position with regard to the deflection mass carrier (52), the deflection mass carrier (52) being connected fixedly to the housing (26) for conjoint rotation about the rotational axis (A), **characterized in that** the deflection mass arrangement (50) is arranged in the interior of the housing (26).

2. Torque transmission assembly according to Claim 1, **characterized in that** the deflection mass carrier (52) is connected to the housing (26) in an axially fixed manner and/or fixedly for conjoint rotation in the adjoining region of two housing parts (28, 30).

3. Torque transmission assembly according to Claim 2, **characterized in that** the deflection mass carrier (52) is connected fixedly to the housing (26) for conjoint rotation by way of riveting, by way of welding, by way of pressing in or by way of spline engagement.

4. Torque transmission assembly according to Claim 2, **characterized in that** the deflection mass carrier (52) is connected fixedly to the housing (26) for conjoint rotation via a coupling element (56; 104).

5. Torque transmission assembly according to Claim 4, **characterized in that** the deflection mass carrier (52) is connected fixedly to the coupling element (56; 104) for conjoint rotation by way of riveting, and the coupling element (56) is connected fixedly to the housing (26) for conjoint rotation by way of welding or spline engagement.

6. Torque transmission assembly according to one of Claims 1 to 5, **characterized in that** at least one of the two housing parts (28, 30) is supported in the axial direction by way of the deflection mass carrier (52) on an end face (62; 68, 70) which is provided in the adjoining region of the two housing parts (28, 30), and/or **in that** a coupling element (56; 104) which couples the deflection mass carrier (52) fixedly to the housing (26) for conjoint rotation is supported in at least one axial direction with regard to the housing (26).

7. Torque transmission assembly according to one of the preceding claims, **characterized in that** no deflection mass arrangement is provided so as to follow the friction face arrangements in the torque flow.

8. Torque transmission assembly for a drive system of a vehicle, comprising a housing (26), on which a pump impeller (33) is arranged, and in the interior of which housing (26) a turbine impeller (34) is provided, a drive-side friction face arrangement which is coupled to the housing (26) for joint rotation about a rotational axis (A), an output-side friction face arrangement which is coupled to an output member (36) for joint rotation about the rotational axis (A) and can be brought into frictional engagement with the drive-side friction face arrangement, and a deflection mass arrangement (50) with a deflection mass carrier (52) and at least one deflection mass (54) which is supported on the deflection mass carrier (52) and can be deflected out of a basic relative position with regard to the deflection mass carrier (52), each deflection mass (54) being coupled to the deflection mass carrier (52) via at least two guide pins (96), by the guide pins (96) moving along the curved guide tracks in the deflection mass carrier (52) and in deflection masses (54), **characterized in that** the deflection mass arrangement (50) is arranged in the interior of the housing (26), and **in that** the deflection mass carrier (52) is connected fixedly to the output member (36) for conjoint rotation about the rotational axis (A).

9. Torque transmission assembly according to Claim 1 or 9, **characterized in that** the torque transmission assembly (20) does not comprise a torsional vibration damper arrangement.

10. Torque transmission assembly according to one of the preceding claims, **characterized in that** the drive-side friction face arrangement comprises a plurality of drive-side friction elements (42) which are coupled to the housing for joint rotation about the rotational axis (A), **in that** the output-side friction face arrangement comprises a plurality of output-side friction elements (44) which are coupled to an output-side friction element carrier (46) for joint rotation about the rotational axis (A), and **in that** a pressing element (48) for pressing the drive-side friction elements (42) and the output-side friction elements (44) against one another is provided.

11. Drive system, comprising:
- a dual mass flywheel with a primary side (14) which is to be coupled or is coupled to a drive assembly, and with a secondary side (16) which is coupled to the primary side (14) via a damper element arrangement for the transmission of torque,
- a torque transmission assembly (20) according to one of the preceding claims, the housing (26) of the torque transmission assembly (20) being coupled to the secondary side (16) of the dual mass flywheel (12) for joint rotation about the rotational axis (A).

12. Drive system according to Claim 11, **characterized in that** an electric machine (22) is provided with a stator arrangement (84) and with a rotor arrangement (82) which is coupled to the secondary side (16) of the dual mass flywheel (12) and to the housing (26) of the torque transmission assembly (20) for joint rotation about the rotational axis (A).

13. Drive system according to Claim 11 or 12, **characterized in that** no deflection mass arrangement is provided so as to follow the friction face arrangements of the torque transmission assembly (20) in the torque flow.

## Revendications

1. Ensemble de transmission de couple pour un système d'entraînement d'un véhicule, comportant un boîtier (26) sur lequel une roue de pompe (33) est prévue, et une roue de turbine (34) est prévue à l'intérieur du boîtier (26), un agencement de surfaces de friction côté entraînement accouplé au boîtier (26) pour la rotation conjointe autour d'un axe de rotation (A), un agencement de surfaces de friction côté sortie accouplé à un organe de sortie (36) pour la rotation conjointe autour de l'axe de rotation (A) et pouvant être amené en prise par friction avec l'agencement de surfaces de friction côté entraînement et un agencement de masse de déviation (50) doté d'un support de masse de déviation (52) et d'au moins une masse de déviation (54) supportée sur le support de masse de déviation (52) et pouvant être déviée à partir d'une position relative de base par rapport au support de masse de déviation (52), le support de masse de déviation (52) étant relié de manière bloquée en rotation au boîtier (26) pour la rotation conjointe autour de l'axe de rotation (A),
**caractérisé en ce que** l'agencement de masse de déviation (50) est agencé à l'intérieur du boîtier (26).

2. Ensemble de transmission de couple selon la revendication 1, **caractérisé en ce que**
le support de masse de déviation (52) est relié au boîtier (26) de manière bloquée en rotation et/ou axialement fixe dans la région où deux parties de boîtier (28, 30) sont adjacentes l'une à l'autre.

3. Ensemble de transmission de couple selon la revendication 2, **caractérisé en ce que** le support de masse de déviation (52) est relié au boîtier (26) de manière bloquée en rotation par rivetage, par soudage, par pressage ou par engrènement.

4. Ensemble de transmission de couple selon la revendication 2, **caractérisé en ce que** le support de masse de déviation (52) est relié au boîtier (26) de manière bloquée en rotation par le biais d'un élément d'accouplement (56 ; 104).

5. Ensemble de transmission de couple selon la revendication 4, **caractérisé en ce que** le support de masse de déviation (52) est relié à l'élément d'accouplement (56 ; 104) de manière bloquée en rotation par rivetage, et l'élément d'accouplement (56) est relié au boîtier (26) de manière bloquée en rotation par soudage ou par engrènement.

6. Ensemble de transmission de couple selon l'une des revendications 1 à 5, **caractérisé en ce que** le support de masse de déviation (52) est supporté dans la direction axiale au niveau d'une surface frontale (62 ; 68, 70) d'au moins l'une des deux parties de boîtier (28, 30), laquelle surface frontale est prévue dans la région où les deux parties de boîtier (28, 30) sont adjacentes, et/ou **en ce qu'**un élément d'accouplement (56 ; 104) accouplant de manière bloquée en rotation le support de masse de déviation (52) au boîtier (26) est supporté par rapport au boîtier (26) dans au moins une direction axiale.

7. Ensemble de transmission de couple selon l'une des revendications précédentes, **caractérisé en ce qu'**aucun agencement de masse de déviation n'est prévu après l'agencement de surfaces de friction dans le flux de couple.

8. Ensemble de transmission de couple pour un système d'entraînement d'un véhicule, comportant un boîtier (26) sur lequel une roue de pompe (33) est prévue, et une roue de turbine (34) est prévue à l'intérieur du boîtier (26), un agencement de surfaces de friction côté entraînement accouplé au boîtier (26) pour la rotation conjointe autour d'un axe de rotation (A), un agencement de surfaces de friction côté sortie accouplé à un organe de sortie (36) pour la rotation conjointe autour de l'axe de rotation (A) et pouvant être amené en prise par friction avec l'agencement de surfaces de friction côté entraînement et un agencement de masse de déviation (50) doté d'un support de masse de déviation (52) et d'au moins une masse de déviation (54) supportée sur le support de masse de déviation (52) et pouvant être déviée à partir d'une position relative de base par rapport au support de masse de déviation (52), chaque masse de déviation (54) étant accouplée au support de masse de déviation (52) par le biais d'au moins deux axes de guidage (96), par le fait que les axes de guidage (96) se déplacent le long des voies de guidage incurvées dans le support de masse de déviation (52) et dans les masses de déviation (54), **caractérisé en ce que** l'agencement de masse de déviation (50) est agencé à l'intérieur du boîtier (26) et **en ce que** le support de masse de déviation (52) est relié de manière bloquée en rotation à l'organe de sortie (36) pour la rotation conjointe autour de l'axe de rotation (A).

9. Ensemble de transmission de couple selon la revendication 1 ou 9, **caractérisé en ce que** l'ensemble de transmissions de couple (20) ne comporte aucun agencement d'amortisseur de vibrations de torsion.

10. Ensemble de transmission de couple selon l'une des revendications précédentes, **caractérisé en ce que** l'agencement de surfaces de friction côté entraînement comporte une pluralité d'éléments de friction (42) côté entraînement accouplés au boîtier pour la rotation conjointe autour de l'axe de rotation (A), **en ce que** l'agencement de surfaces de friction côté sortie comporte une pluralité d'éléments de friction (44) côté sortie accouplés à un support d'éléments de friction (46) côté sortie pour la rotation conjointe autour de l'axe de rotation (A), et **en ce qu'**un élément de pression (48) est prévu pour presser les uns contre les autres les éléments de friction (42) côté entraînement et les éléments de friction (44) côté sortie.

11. Système d'entraînement, comportant :
- un volant d'inertie à deux masses doté d'un côté primaire (14) devant être accouplé ou accouplé à un groupe motopropulseur et d'un côté secondaire (16) accouplé au côté primaire (14) par le biais d'un agencement d'éléments amortisseurs pour la transmission de couple,
- un ensemble de transmission de couple (20) selon l'une des revendications précédentes, le boîtier (26) de l'ensemble de transmission de couple (20) étant accouplé au côté secondaire (16) du volant d'inertie à deux masses (12) pour la rotation conjointe autour de l'axe de rotation (A).

12. Système d'entraînement selon la revendication 11, **caractérisé en ce qu'**il est prévu un moteur électrique (22) doté d'un agencement de stator (84) et d'un agencement de rotor (82) accouplé au côté secondaire (16) du volant d'inertie à deux masses (12) et au boîtier (26) de l'ensemble de transmission de couple (20) pour la rotation conjointe autour de l'axe de rotation (A).

13. Système d'entraînement selon la revendication 11 ou 12, **caractérisé en ce qu'**aucun agencement de masse de déviation n'est prévu après l'agencement de surfaces de friction de l'ensemble de transmission de couple (20) dans le flux de couple.
